# EUROPEAN PATENT APPLICATION

(11) **EP 4 470 892 A1**
(43) Date of publication of application: **04.12.2024**
(21) Application number: 24178812.4
(22) Date of filing: 29.05.2024
(51) Int. Cl.: B62J 33/00, B62K 21/26, B62K 23/04

(54) **GRIP HEATING DEVICE**

(30) Priority: 31.05.2023 JP 2023089822
(71) Applicant: Asahi Denso Co., Ltd., Shizuoka 434-0046 (JP)
(72) Inventor: Ishibashi, Ryuki, Hamamatsu City, Shizuoka, 434-0046 (JP)
(74) Representative: Grünecker Patent- und Rechtsanwälte PartG mbB

(57) **Abstract**

A grip heating device (R, L) has a handle pipe configured to be attached to a handlebar (H) of a vehicle, a heating portion (2, 6) attached to the handle pipe and configured to generate heat by a current flowing therethrough, and a handle grip (3, 7) formed on an outer periphery of the handle pipe via the heating portion and configured to be held by a driver of the vehicle. The heating portion is heated by flowing a current therethrough to warm the handle grip. The handle pipe has a groove (1a, 5a) that forms a gap (K) between the handle pipe and the handlebar. The groove continuously extends between one end and the other end of the handle pipe.

## Description

### TECHNICAL FIELD

The present invention relates to a grip heating device that warms a handle grip by causing a heating portion to generate heat.

### BACKGROUND ART

In a vehicle including a handlebar, such as a two-wheel vehicle, an ATV, or a snowmobile, a handle grip that can be held by a driver is formed at the distal end of the handlebar. In the related art, in order to keep the handle grip warm when the driver holds the handle grip, it has been proposed that such a handle grip includes a built-in heating portion (a plate-shaped heater or the like) through which the current can flow from a battery mounted on the vehicle. Such a grip heating device is disclosed in, for example, Japan Utility Model Publication JPH02-010190Y2.

In the grip heating device in the related art described above, since a concave portion is formed on the surface side in contact with the handlebar, it is possible to reduce the contact area with the handlebar and prevent the heat generated by the plate-shaped heater from being transmitted to the handlebar and lost. However, the concave portion may cause the backlash between the grip heating device and the handlebar, and the attachment state to the handlebar may become unstable.

### SUMMARY OF INVENTION

The object of the present invention is to provide a grip heating device capable of preventing the heat generated by a heating portion from being transmitted to a handlebar, and of stabilizing the attachment state to the handlebar.
(1) A grip heating device including:
   a handle pipe configured to be attached to a handlebar of a vehicle;
   a heating portion attached to the handle pipe and configured to generate heat by a current flowing therethrough; and
   a handle grip formed on an outer periphery of the handle pipe via the heating portion and configured to be held by a driver of the vehicle,
   in which the heating portion is heated by flowing a current therethrough to warm the handle grip, and
   the handle pipe has a groove that forms a gap between the handle pipe and the handlebar, the groove continuously extending between one end and an other end of the handle pipe.
(2) The grip heating device according to (1),
   in which a plurality of the grooves are formed on an inner peripheral surface of the handle pipe in a circumferential direction.
(3) The grip heating device according to (1) or (2),
   in which the groove is formed linearly from the one end to the other end of the handle pipe, and a plurality of the grooves are formed at equal intervals in a circumferential direction.
(4) The grip heating device according to any one of (1) to (3),
   in which the handle pipe is attached to the handlebar to be rotatable relative to the handlebar.
(5) The grip heating device according to any one of (1) to (3),
   in which the handle pipe is attached to the handlebar to be fixed on the handlebar.

According to the above-described (1), the handle pipe has the groove that forms the gap between the handle pipe and the handlebar, and the groove continuously extends between the one end and the other end of the handle pipe. Therefore, the heat generated in the heating portion can be prevented from being transmitted to the handlebar, and the attachment state to the handlebar can be stabilized.

According to the above-described (2), since the plurality of grooves are formed on the inner peripheral surface of the handle pipe in the circumferential direction, it is possible to stabilize the attachment state to the handlebar while reducing the contact area with the handlebar.

According to the above-described (3), the groove is linearly formed from the one end to the other end of the handle pipe, and the plurality of grooves are formed at equal intervals in the circumferential direction. Therefore, the attachment state to the handlebar can be further stabilized while reducing the contact area with the handlebar.

According to the above-described (4), since the handle pipe is attached to the handlebar to be rotatable relative to the handlebar, the handle pipe can be applied to a throttle grip attached to the right side end portion of the handlebar of the vehicle, and a rotation operation for a throttle operation can be smoothly performed.

According to the above-described (5), since the handle pipe is attached to the handlebar to be fixed on the handlebar, the handle pipe can be applied to the holding grip attached to the left side end portion of the handlebar of the vehicle, and holding by the driver can be reliably and stably performed.

### BRIEF DESCRIPTION OF DRAWINGS

FIG. 1 is a front view and an end view showing a grip heating device (a right side grip heating device) according to an embodiment of the present invention.
FIG. 2 is a cross-sectional view taken along a line II-II in FIG. 1.
FIG. 3 is a cross-sectional view taken along a line III-III in FIG. 1.
FIG. 4 is a perspective view showing the grip heating device.
FIG. 5 is an exploded perspective view showing the grip heating device.
FIG. 6 is a three-sided view showing a handle grip of the grip heating device.
FIG. 7 is a plan view showing a flexible substrate serving as a heating portion of the grip heating device.
FIG. 8 is a front view and an end view showing a grip heating device (a left side grip heating device) according to the embodiment of the present invention.
FIG. 9 is a cross-sectional view taken along a line IX-IX in FIG. 8.
FIG. 10 is an exploded perspective view showing the grip heating device.
FIG. 11 is a three-sided view showing the handle grip of the grip heating device.
FIG. 12 is a front view showing the grip heating device (the right side grip heating device and the left side grip heating device) to which the embodiment of the present invention is applied.
FIG. 13 is a table showing experimental results showing the effects of the present invention.

### DESCRIPTION OF EMBODIMENTS

Hereinafter, embodiments of the present invention will be specifically described with reference to the drawings.

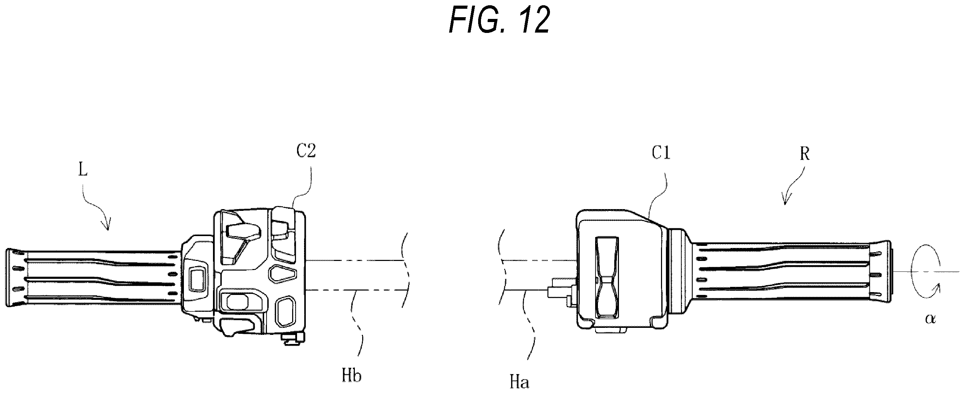

A grip heating device according to the present embodiment is used for heating a handle grip (left and right holding grips held by a driver) attached to the distal end of a handlebar of a two-wheel vehicle. As shown in FIG. 12, the grip heating device includes a right side grip heating device R attached to a right side end portion Ha of a handlebar H and a left side grip heating device L attached to a left side end portion Hb of the handlebar H.

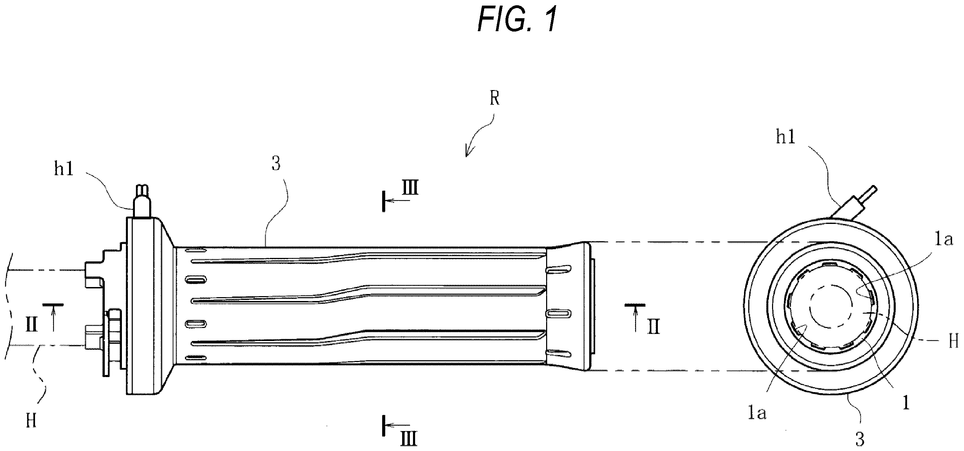

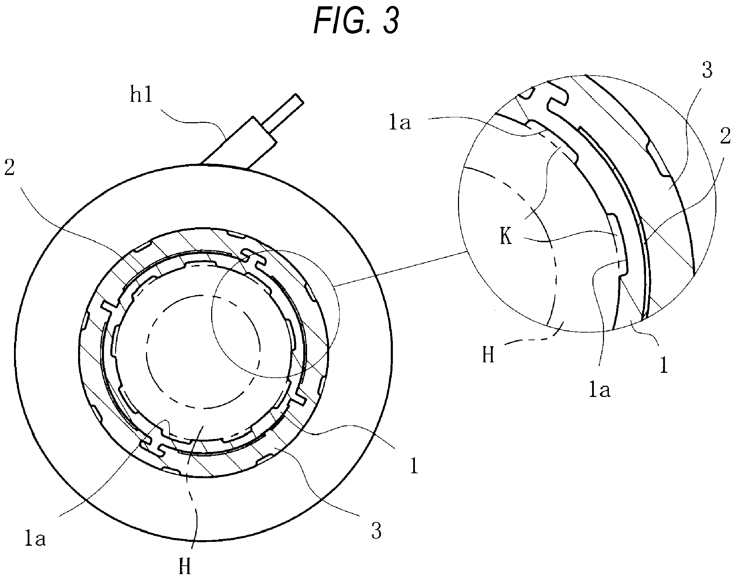

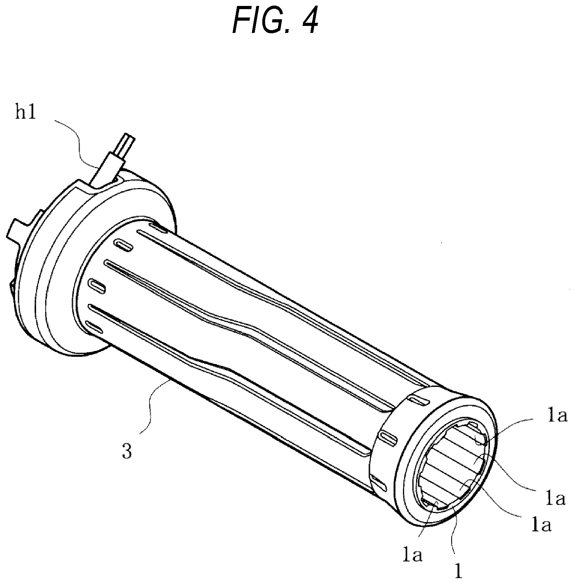

As shown in FIG. 12, the right side grip heating device R is attached adjacent to a switch case C1 in which various switches are formed. As shown in FIGS. 1 to 7, the right side grip heating device R includes a handle pipe 1, a flexible substrate 2 serving as a heating portion, a handle grip 3, and a cover member 4. The handle pipe 1 of the right side grip heating device R is attached to the right side end portion Ha of the handlebar H to be rotatable about the axis (the α direction shown in FIG. 12), and functions as a throttle grip that can control the driving source of the vehicle by the rotation operation.

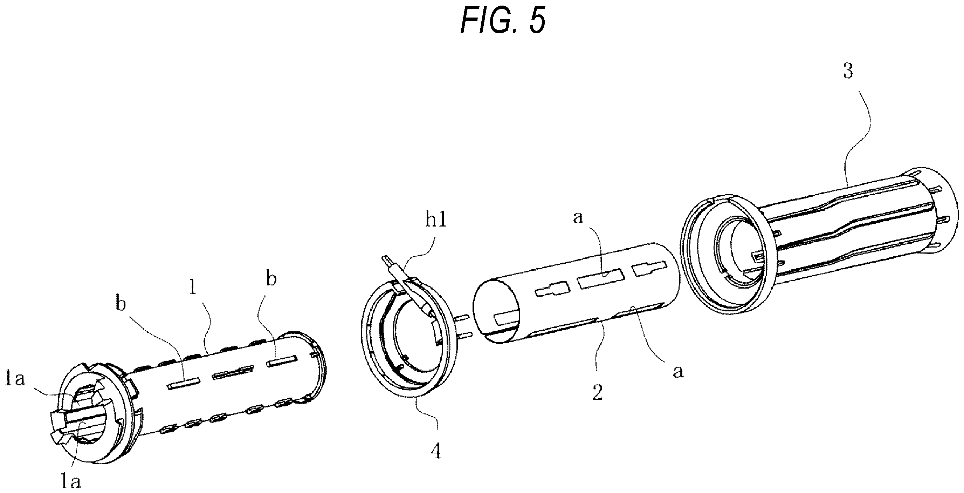

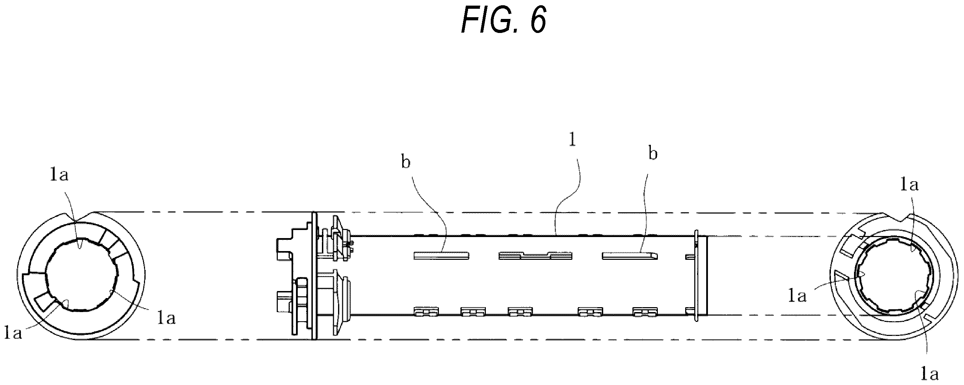

As shown in FIGS. 5 and 6, the handle pipe 1 is made of hard resin molded into the cylindrical shape, and is implemented such that the flexible substrate 2 is wound around the outer peripheral surface of the handle pipe 1. Further, the cover member 4 made of resin is attached to the base end side of the handle pipe 1, and wiring h1 is attached to the cover member 4.

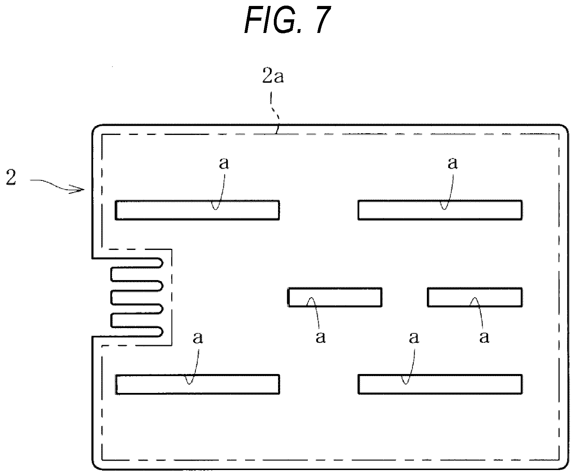

The flexible substrate 2 is formed of a sheet-shaped flexible member wound around the outer peripheral surface of the handle pipe 1, and has a heat generating region 2a in which a predetermined heating wire pattern is formed on the front surface or the back surface as shown in FIG. 7. A plurality of position determination openings a are formed at predetermined positions on the surface of the flexible substrate 2, and the flexible substrate 2 can be positioned with respect to the handle pipe 1 by inserting the position determination openings a into position determination protrusions b formed on the outer peripheral surface of the handle pipe 1.

The heating wire pattern formed on the flexible substrate 2 is connected to the wiring h1 extending from a power source (not shown) (for example, a battery mounted on the vehicle). When the current is supplied from the power source, the current flows through the heating wire pattern to generate heat. Therefore, the heat is transmitted to the handle grip 3 to heat the holding surface formed on the outer peripheral surface of the handle grip 3.

The handle grip 3 is formed on the outer periphery of the handle pipe 1 via the flexible substrate 2, can be held by the driver, and is made of a predetermined resin material (for example, a soft resin such as an elastomer or a rubber material). Specifically, the handle grip 3 including the flexible substrate 2 therein can be obtained by placing the handle pipe 1 around which the flexible substrate 2 is wound in a predetermined mold and secondarily molding the outer periphery of the handle pipe 1 with a predetermined resin material.

Here, as shown in FIGS. 1 to 4, the handle pipe 1 according to the present embodiment has a groove 1a that is formed on the inner peripheral surface thereof and that forms a gap K between the handle pipe 1 and the right side end portion Ha of the handlebar H. The groove 1a has a concave shape continuously extending between one end and the other end of the handle pipe 1 in the axial direction, and a plurality of grooves 1a are formed on the inner peripheral surface of the handle pipe 1 in the circumferential direction.

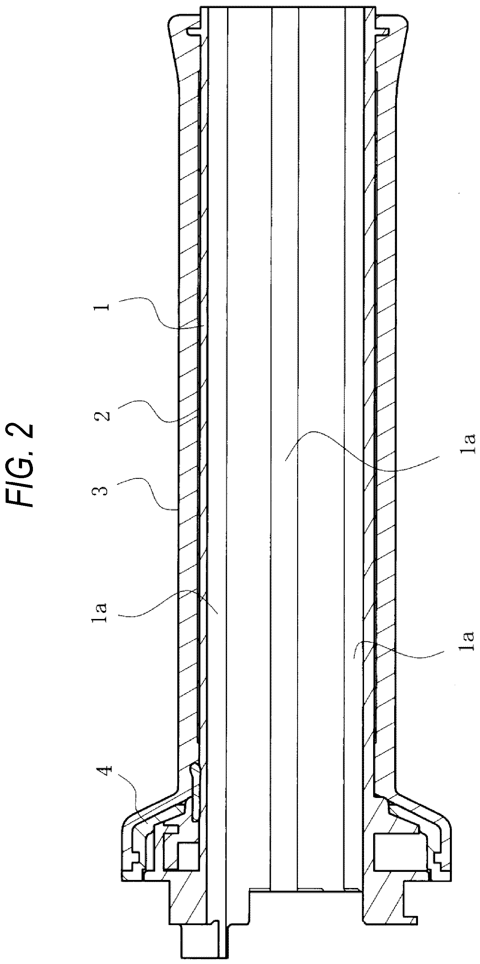

More specifically, the groove 1a formed in the handle pipe 1 of the right side grip heating device R according to the present embodiment is linearly formed from the one end (the distal end) to the other end (the base end) of the handle pipe 1 as shown in FIG. 2, and a plurality of grooves 1a are formed at equal intervals on the inner peripheral surface in the circumferential direction as shown in FIG. 6. When the right side grip heating device R is attached to the right side end portion Ha of the handlebar H, the handle pipe 1 is rotatable relative to the handlebar H.

Accordingly, the gap K is interposed between the handle pipe 1 and the handlebar H, the heat generated in the flexible substrate 2 can be prevented from being transmitted to the handlebar H, and the handle grip 3 can be efficiently heated. However, the handle pipe 1 of the right side grip heating device R rotates on the outer peripheral surface of the handlebar H when the throttle operation is performed. Therefore, the backlash during the rotation can be reduced by forming a plurality of grooves 1a at equal intervals in the circumferential direction.

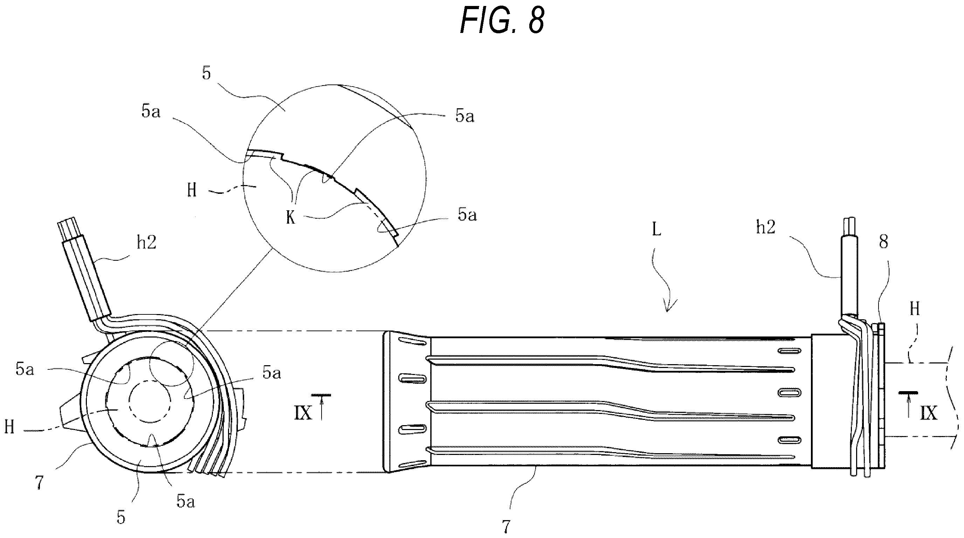

On the other hand, as shown in FIG. 12, the left side grip heating device L is attached adjacent to a switch case C2 in which various switches are formed. As shown in FIGS. 8 to 11, the left side grip heating device L includes a handle pipe 5, a heating wire 6 serving as a heating portion, a handle grip 7, and an attachment plate 8. The handle pipe 5 of the left side grip heating device L is attached to the left side end portion Hb of the handlebar H to be fixed on the handlebar H with an adhesive or the like, and can be held by the driver.

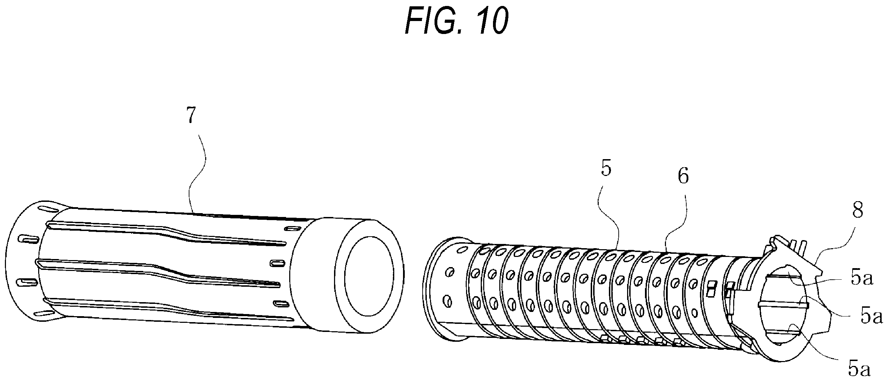

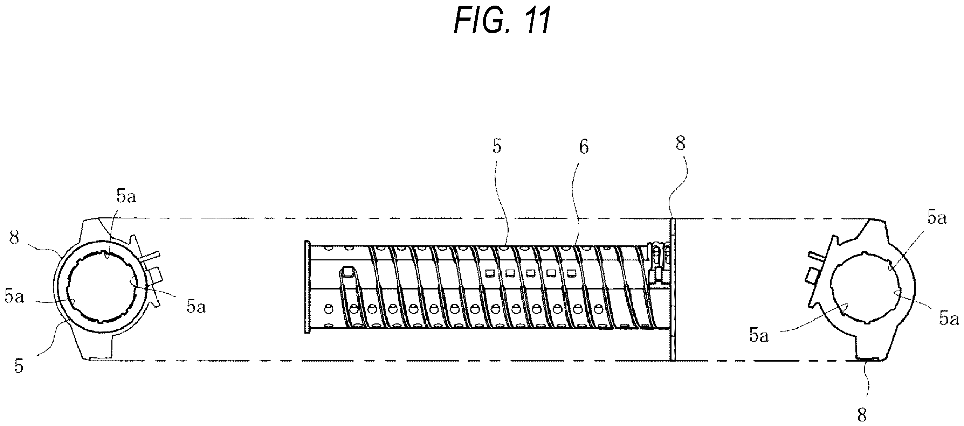

As shown in FIGS. 10 and 11, the handle pipe 5 is made of hard resin molded into the cylindrical shape, and the heating wire 6 is spirally wound around the outer peripheral surface of the handle pipe 5. Further, an attachment plate 8 made of resin is attached to the base end side of the handle pipe 5, and wiring h2 is attached to the attachment plate 8.

The heating wire 6 is made of a conductive member spirally wound around the outer peripheral surface of the handle pipe 5, and is connected to the wiring h2 extending from a power source (not shown) (for example, a battery mounted on the vehicle). When the current is supplied from the power source, the current flows to generate heat. Therefore, the heat is transmitted to the handle grip 7 to warm the holding surface formed on the outer peripheral surface of the handle grip 7.

The handle grip 7 is formed on the outer periphery of the handle pipe 5 via the heating wire 6, can be held by the driver, and is made of a predetermined resin material (for example, a soft resin such as an elastomer or a rubber material). Specifically, the handle grip 7 including the heating wire 6 therein can be obtained by placing the handle pipe 5 around which the heating wire 6 is wound in a predetermined mold and secondarily molding the outer periphery of the handle pipe 5 with a predetermined resin material.

Here, as shown in FIGS. 8 to 10, the handle pipe 5 according to the present embodiment has a groove 5a that is formed on the inner peripheral surface thereof and that forms the gap K between the handle pipe 5 and the left side end portion Hb of the handlebar H. Similarly to the groove 1a formed in the handle pipe 1 of the right side grip heating device R, the groove 5a has a concave shape continuously extending between one end and the other end of the handle pipe 5 in the axial direction, and a plurality of grooves 5a are formed on the inner peripheral surface of the handle pipe 5 in the circumferential direction.

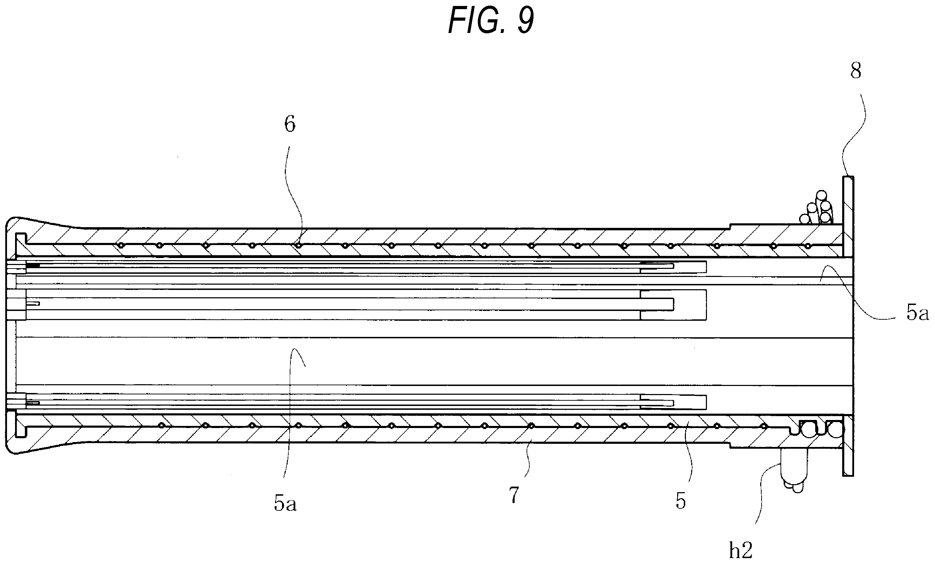

More specifically, the groove 5a formed in the handle pipe 5 of the left side grip heating device L according to the present embodiment is linearly formed from the one end (the distal end) to the other end (the base end) of the handle pipe 5 as shown in FIG. 9, and a plurality of grooves 5a are formed on the inner peripheral surface in the circumferential direction as shown in FIGS. 8 and 11. When the left side grip heating device L is attached to the left side end portion Hb of the handlebar H, the handle pipe 5 is fixed relative to the handlebar H. Since the handle pipe 5 of the left side grip heating device L has an adhesive surface for the handlebar H on the inner peripheral surface of the handle pipe 5, the groove 5a is formed at a position avoiding the adhesive surface.

Accordingly, the gap K is interposed between the handle pipe 5 and the handlebar H, the heat generated in the heating wire 6 can be prevented from being transmitted to the handlebar H, and the handle grip 7 can be efficiently heated. However, since the handle pipe 5 of the left side grip heating device L is fixed on the handlebar H with an adhesive or the like, the handle pipe 5 can be reliably fixed while ensuring a constant contact area with the handlebar H.

Next, the experimental results showing the effects of the grip heating device according to the present embodiment will be described.

The right side grip heating device R (the example) according to the present embodiment and a comparative example in which the groove 1a is not formed but other configurations, dimensions, and the like are the same were prepared, and experiments were performed in a dark room and a place where the ambient temperature is 22°C.

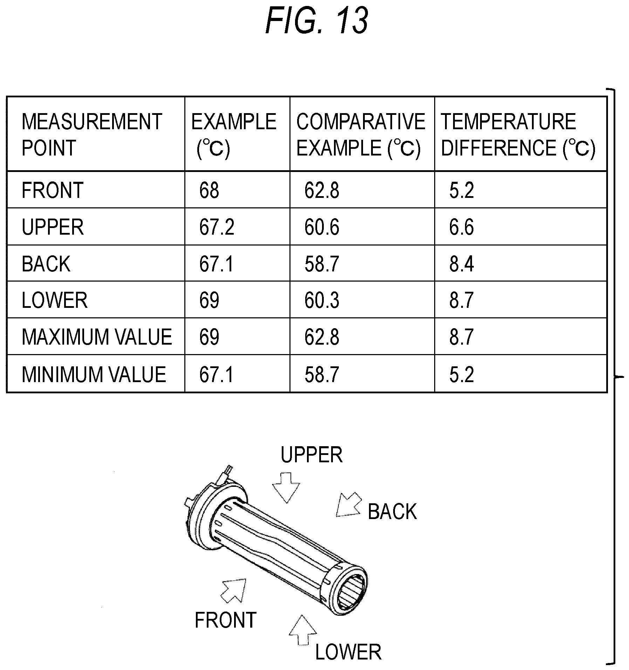

Then, when the flexible substrate 2 in the example and the comparative example was energized with a power consumption of 14 W, and the temperature was measured in each region of the front portion, the upper portion, the back portion, and the lower portion of the surface of the handle grip, the results were as shown in the table shown in FIG. 13. According to the experimental results, it was found that the temperature in the example was higher than that in the comparative example at all locations, and thus the heating efficiency of the handle grip 3 can be increased by forming the gap K by the groove 1a.

According to the grip heating device (R, L) according to the present embodiment, the handle pipe (1, 5) has the groove (1a, 5a) that forms the gap K between the handle pipe (1, 5) and the handlebar H, and the groove (1a, 5a) continuously extends between one end and the other end of the handle pipe (1, 5). Therefore, the heat generated in the flexible substrate 2 or the heating wire 6 can be prevented from being transmitted to the handlebar H, and the attachment state to the handlebar H can be stabilized.

In particular, since a plurality of grooves (1a, 5a) according to the present embodiment are formed on the inner peripheral surface of the handle pipe (1, 5) in the circumferential direction (over the entire circumference), it is possible to stabilize the attachment state to the handlebar H while reducing the contact area with the handlebar H. The groove 1a of the right side grip heating device R is linearly formed from one end to the other end of the handle pipe 1, and a plurality of grooves 1a are formed at equal intervals in the circumferential direction. Therefore, the attachment state to the handlebar H can be further stabilized while reducing the contact area with the handlebar H.

Further, according to the right side grip heating device R, since the handle pipe 1 is attached to the handlebar H to be rotatable relative to the handlebar H, the handle pipe 1 can be applied to the throttle grip attached to the right side end portion Ha of the handlebar H of the vehicle, and the rotation operation for the throttle operation can be smoothly performed. Furthermore, according to the left side grip heating device L, since the handle pipe 5 is attached to the handlebar H to be fixed on the handlebar H, the handle pipe 5 can be applied to the holding grip attached to the left side end portion Hb of the handlebar H of the vehicle, and the holding of the driver can be reliably and stably performed.

Although the present embodiment has been described above, the present invention is not limited thereto, and for example, a heating portion of another form may be used instead of the flexible substrate 2 and the heating wire 6, and the handle grip (3, 7) may have another shape, material, or the like. It is sufficient that the groove (1a, 5a) continuously extends between one end and the other end of the handle pipe (1, 5) and forms the gap K between the handle pipe (1, 5) and the handlebar H, and the depth dimension and the width dimension of the groove may differ depending on the location. In the present embodiment, the present invention is applied to heating the handle grip (3, 7) of the two-wheel vehicle. Alternatively, the present invention may be applied to other vehicles (vehicles including a handlebar, such as an ATV and a snowmobile).

As long as the purpose is similar to that of the present invention, the present invention can be applied to devices having a different external shape or having other functions added.

## Claims

1. A grip heating device comprising:
a handle pipe configured to be attached to a handlebar of a vehicle;
a heating portion attached to the handle pipe and configured to generate heat by a current flowing therethrough; and
a handle grip formed on an outer periphery of the handle pipe via the heating portion and configured to be held by a driver of the vehicle,
wherein the heating portion is heated by flowing a current therethrough to warm the handle grip, and
the handle pipe has a groove that forms a gap between the handle pipe and the handlebar, the groove continuously extending between one end and an other end of the handle pipe.

2. The grip heating device according to claim 1,
wherein a plurality of the grooves are formed on an inner peripheral surface of the handle pipe in a circumferential direction.

3. The grip heating device according to claim 1 or 2,
wherein the groove is formed linearly from the one end to the other end of the handle pipe, and a plurality of the grooves are formed at equal intervals in a circumferential direction.

4. The grip heating device according to any one of claims 1 to 3,
wherein the handle pipe is attached to the handlebar to be rotatable relative to the handlebar.

5. The grip heating device according to any one of claims 1 to 3,
wherein the handle pipe is attached to the handlebar to be fixed on the handlebar.
